# EUROPEAN PATENT APPLICATION

(11) **EP 4 746 145 A1**
(43) Date of publication of application: **20.05.2026**
(21) Application number: 25224465.2
(22) Date of filing: 17.12.2025
(51) Int. Cl.: H01M 50/197, H01M 50/198, H01M 50/202, H01M 50/24, H01M 50/244, H01M 50/271

(54) **ELECTRICAL DEVICE**

(30) Priority: 18.12.2024 CN 202411874016
(71) Applicant: Ningde Amperex Technology Limited, Ningde City, Fujian Province 352100 (CN)
(72) Inventor: LI, Chenchen, Ningde City, 352100 (CN)
(74) Representative: Kraus & Lederer PartGmbB

(57) **Abstract**

An electrical device, including an electrical main body (11) provided with a battery compartment (111); a cover (12) detachably attached on the electrical main body (11) to cover the battery compartment (111); and a secondary battery (13) disposed in the battery compartment (111) and electrically connected to the electrical main body (11). The secondary battery (13) includes a housing (131), an electrode assembly (132), and an adhesive piece (14). The electrode assembly (132) is disposed in the housing (131). The adhesive piece (14) bonds the cover (12) to the housing (131). The adhesive piece (14) includes a base layer (141), a first adhesive layer (142), and a second adhesive layer (143). The first adhesive layer (142) is of a reducible adhesiveness and is bonded to the cover (12), and the second adhesive layer (142) is of a fixed adhesiveness and is bonded to the housing (131).

## Description

### TECHNICAL FIELD

This application relates to the technical field of battery fixation, and in particular, to an electrical device.

### BACKGROUND

In the prior art, a secondary battery of an electrical device is disposed in a battery compartment, and the secondary battery is bonded to the battery compartment by using conventional double-sided tape. To facilitate detachment of the secondary battery from the battery compartment, a wrapping film is typically provided on a surface of a housing of the secondary battery. However, due to the bond between the secondary battery and the battery compartment, the wrapping film is prone to snap off during the detachment, resulting in poor experience of the detachment. Further, the conventional double-sided tape and wrapping film occupy a relatively large proportion of thickness in the entire battery compartment, thereby giving rise to a need to increase the capacity of the secondary battery.

### SUMMARY

In view of the above situation, this application provides an electrical device to increase a capacity of the secondary battery.

This application provides an electrical device, including an electrical main body, a cover, and a secondary battery. The electrical main body is provided with a battery compartment. The cover is detachably attached on the electrical main body to cover the battery compartment. The secondary battery is disposed in the battery compartment and electrically connected to the electrical main body. The secondary battery includes a housing, an electrode assembly, and an adhesive piece. The housing defines an accommodation cavity, and the electrode assembly is disposed in the accommodation cavity. The adhesive piece bonds the cover to the housing. The adhesive piece includes a base layer, a first adhesive layer, and a second adhesive layer. Along a first direction, the first adhesive layer and the second adhesive layer are disposed on different sides of the base layer respectively. The first adhesive layer is of a reducible adhesiveness and is bonded to the cover, and the second adhesive layer is of a fixed adhesiveness and is bonded to the housing.

The adhesive piece bonds the secondary battery to the cover. The second adhesive layer of a fixed adhesiveness reduces the probability of wobbling of the secondary battery in the battery compartment, and improves the stability of the secondary battery in the battery compartment. When the secondary battery needs to be detached, the cover is detached from the electrical main body first, and then the secondary battery is detached from the cover by reducing the adhesiveness of the first adhesive layer, thereby facilitating detachment. In addition, the secondary battery is detachable in the case that a wrapping film is canceled, thereby increasing space available for placement of the secondary battery, and increasing the capacity of the secondary battery.

In one or more embodiments, a material of the first adhesive layer includes a first material and a second material. The first material includes at least one of polyacrylate, polyurethane, epoxy resin, or a derivative thereof. The second material includes at least one of silicon dioxide, aluminum oxide, fluorinated compound, or titanium dioxide. A refractive index of the first material is n₁, and a refractive index of the second material is n₂, satisfying: 1.3 ≤ n₁ ≤ 1.4, and 1.3 ≤ n₂ ≤ 1.4. A solid content of the first adhesive layer is m₁, satisfying: 10% ≤ m₁ ≤ 60%.

In the above embodiment, the adhesiveness of the first adhesive layer is reducible as irradiated by ultraviolet light. The ultraviolet light irradiating the first adhesive layer facilitates detachment of the secondary battery from the cover. Furthermore, the ultraviolet light brings just a low adverse effect on the secondary battery. When the secondary battery is detached from the cover by ultraviolet light irradiation to inspect and repair the secondary battery, damage to the performance of the secondary battery is reduced.

In one or more embodiments, along the first direction, a light transmittance of an overlap part of the cover that overlaps a projection of the first adhesive layer is greater than 70%.

In the above embodiment, it is convenient for the ultraviolet light to irradiate the first adhesive layer along the first direction through the cover, thereby quickening reduction of the adhesiveness of the first adhesive layer and further improving the convenience of detaching the secondary battery from the cover.

In one or more embodiments, a material of the first adhesive layer includes a third material and a fourth material. The third material includes at least one of polyacrylate, polyurethane, epoxy resin, or a derivative thereof. The fourth material includes at least one of silicone oil, fluorinated compound, wax, or a surfactant. A solid content of the first adhesive layer is m₁, satisfying: 10% ≤ m₁ ≤ 60%.

In the above embodiment, the adhesiveness of the first adhesive layer is reducible under a low-temperature condition. The reduction in the temperature of the first adhesive layer improves the convenience of detaching the secondary battery from the cover.

In one or more embodiments, a material of the first adhesive layer includes a fifth material and a fourth material. The fifth material includes at least one of polyacrylate, polyurethane, epoxy resin, phenolic resin, silicone rubber, or a derivative thereof. The fourth material includes at least one of silicone oil, fluorinated compound, wax, or a surfactant. A solid content of the first adhesive layer is m₁, satisfying: 10% ≤ m₁ ≤ 60%.

In the above embodiment, the adhesiveness of the first adhesive layer is reducible under a high-temperature condition. The increase in the temperature of the first adhesive layer improves convenience of detaching the secondary battery from the cover.

In one or more embodiments, a material of the cover includes a metal material.

In the above embodiment, the thermal conductivity of the cover is improved favorably, and it is convenient to increase the speed of temperature drop or rise of the first adhesive layer, thereby quickening reduction of the adhesiveness of the first adhesive layer and further improving the convenience of detaching the secondary battery from the cover.

In one or more embodiments, a material of the first adhesive layer includes at least one of polyaniline, polypyrrole, or polythiophene.

In the above embodiment, the adhesiveness of the first adhesive layer is reducible under an electrostatic condition. By leaving electrostatic charges to flow through the cover, the convenience of detaching the secondary battery from the cover is improved.

In one or more embodiments, the material of the first adhesive layer further includes at least one of an alkyl sulfate salt, an alkylbenzene sulfonate, a quaternary ammonium salt, an amine salt, polyethylene glycol, or polyoxyethylene.

In the above embodiment, the resistivity of the first adhesive layer is reduced, and the speed of conducting electrostatic charges away from the secondary battery is increased, thereby reducing the damage to the performance of the secondary battery caused by electrostatic accumulation after the adhesiveness of the first adhesive layer is electrostatically reduced.

In one or more embodiments, the material of the first adhesive layer further includes at least one of conductive polyurethane, conductive polyamide, a nanotube coating, or a graphene coating.

In the above embodiment, the first adhesive layer provides a low-resistance path for conducting electrostatic charges away from the secondary battery, thereby increasing the speed of conducting electrostatic charges away from the secondary battery, and reducing the damage to the performance of the secondary battery caused by electrostatic accumulation after the adhesiveness of the first adhesive layer is electrostatically reduced.

In one or more embodiments, a material of the second adhesive layer includes a sixth material. The sixth material includes at least one of polyacrylate, polyurethane, epoxy resin, or a derivative thereof. A refractive index of the sixth material is n₆, satisfying: 1.4 < n₆ ≤ 1.6. A solid content of the second adhesive layer is m₂, satisfying: m₂ > 60%.

In the above embodiment, the adhesiveness of the second adhesive layer can remain unchanged under conditions such as temperature variation, light, and static electricity, thereby improving the stability of adhesion between the adhesive piece and the housing.

In one or more embodiments, the secondary battery includes a fixing piece. The electrode assembly is fixedly connected to the housing by the fixing piece. Along the first direction, a projection of the fixing piece is separate from a projection of the adhesive piece.

In the above embodiment, by staggering the fixing piece from the adhesive piece along the first direction, this application reduces the total space occupied by the fixing piece and the adhesive piece together in the first direction, thereby further increasing the space available for placement of the secondary battery and further increasing the capacity of the secondary battery.

In one or more embodiments, the base layer is provided with a slit. A cleaving direction of the slit is not parallel to the first direction.

In the above embodiment, in the case that the secondary battery is greatly affected by temperature and it is inconvenient to detach the secondary battery from the cover by reducing the adhesiveness of the first adhesive layer under a high-temperature condition or a low-temperature condition, the secondary battery may be separated from the cover through the slit first, and then the adhesiveness of the first adhesive layer that remains on the cover is reduced to separate the cover from the first adhesive layer, thereby facilitating the reuse of the cover.

In one or more embodiments, the electrical device further includes a securing piece. The securing piece is disposed on the cover. The secondary battery is removably secured to the cover by the securing piece.

In the above embodiment, the securing piece reduces the probability that the secondary battery wobbles in the battery compartment due to unexpected reduction of the adhesiveness of the first adhesive layer.

In one or more embodiments, the adhesiveness of the first adhesive layer is reducible to a level lower than the adhesiveness of the second adhesive layer, and the adhesiveness of the first adhesive layer differs from the adhesiveness of the second adhesive layer by at least 50 N/m.

In the above embodiment, the adhesiveness of the first adhesive layer can be reduced to a level significantly different from that of the second adhesive layer, thereby causing the cover to be more detachable from the adhesive piece than the secondary battery, and further improving the convenience of detaching the secondary battery from the cover.

In one or more embodiments, the cover is provided with a groove. At least a part of the adhesive piece is accommodated in the groove.

In the above embodiment, this application reduces the space occupied by the adhesive piece in the electrical device, thereby further increasing the space available for placement of the secondary battery and consequently further increasing the capacity of the secondary battery.

In one or more embodiments, a thickness of the second adhesive layer is less than a thickness of the first adhesive layer.

In the above embodiment, the adhesiveness of the first adhesive layer is reducible, and the adhesiveness of the second adhesive layer is fixed. Therefore, in practical applications, the second adhesive layer can be made thinner than the first adhesive layer, thereby further increasing the space available for placement of the secondary battery and consequently further increasing the capacity of the secondary battery.

In one or more embodiments, the thickness of the first adhesive layer is 10 µm to 50 µm, and the thickness of the second adhesive layer is 5 µm to 30 µm.

In the above embodiment, with a thickness falling within the range of 10 µm to 50 µm, the first adhesive layer is prevented from being excessively thick, thereby further increasing the capacity of the secondary battery, and the first adhesive layer is prevented from being excessively thin, thereby ensuring sufficient bonding strength between the first adhesive layer and the cover, reducing the probability of movement of the secondary battery relative to the cover within the battery compartment, and improving the stability of the secondary battery within the battery compartment. With a thickness falling within the range of 5 µm to 30 µm, the second adhesive layer is prevented from being excessively thick, thereby increasing the capacity of the secondary battery; and the second adhesive layer is prevented from being excessively thin, thereby ensuring sufficient bonding strength between the second adhesive layer and the housing, further reducing the probability of movement of the secondary battery relative to the cover within the battery compartment, and consequently further improving the stability of the secondary battery within the battery compartment.

### BRIEF DESCRIPTION OF DRAWINGS

FIG. 1 is an overall schematic diagram of an electrical device according to an embodiment of this application;
FIG. 2 is an exploded view of an electrical device according to an embodiment of this application;
FIG. 3 is a cross-sectional view taken along a section line A-A shown in FIG. 2;
FIG. 4 is an overall schematic diagram of a secondary battery according to an embodiment of this application; and
FIG. 5 is a schematic structural diagram of an adhesive piece according to an embodiment of this application.

### List of reference signs:

10. electrical device; 11. electrical main body; 111. battery compartment; 12. cover; 121. capping portion; 122. first portion; 122. second portion; 13. secondary battery; 131. housing; 1311. accommodation cavity; 1312. first wall; 1313. second wall; 132. electrode assembly; 1321. first electrode plate; 1322. second electrode plate; 1323. separator; 133. first tab; 134. second tab; 14. adhesive piece; 141. base layer; 142. first adhesive layer; 143. second adhesive layer; 15. fixing piece; X. first direction; Y. second direction; Z. third direction.

### DETAILED DESCRIPTION

The following describes the technical solutions in some embodiments of this application with reference to the drawings hereof. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component.

Unless otherwise expressly specified, the term "a plurality of" used herein means two or more.

The technical terms "first" and "second" are merely intended to distinguish between different items but not intended to indicate or imply relative importance or implicitly specify the number of the indicated technical features, specific order, or order of precedence.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

Understandably, in a technical solution of this application, considering the actual process tolerance, when two components are arranged parallel or perpendicular to each other along the same direction, an angle may exist between the two components. The angle between two components permits a tolerance of 0 to ±10%, and a measured value of the angle between the two components may be greater than, equal to, or less than the desired or nominal value with a tolerance of 0 to ±10%.

An embodiment of this application provides an electrical device. The electrical device includes an electrical main body, a cover, and a secondary battery. The electrical main body is provided with a battery compartment. The cover is detachably attached on the electrical main body to cover the battery compartment. The secondary battery is disposed in the battery compartment and electrically connected to the electrical main body. The secondary battery includes a housing, an electrode assembly, and an adhesive piece. The housing defines an accommodation cavity, and the electrode assembly is disposed in the accommodation cavity. The adhesive piece bonds the cover to the housing. The adhesive piece includes a base layer, a first adhesive layer, and a second adhesive layer. Along a first direction, the first adhesive layer and the second adhesive layer are disposed on different sides of the base layer respectively. The first adhesive layer is of a reducible adhesiveness and is bonded to the cover, and the second adhesive layer is of a fixed adhesiveness and is bonded to the housing.

The adhesive piece bonds the secondary battery to the cover. The second adhesive layer of a fixed adhesiveness reduces the probability of wobbling of the secondary battery in the battery compartment, and improves the stability of the secondary battery in the battery compartment. When the secondary battery needs to be detached, the cover is detached from the electrical main body first, and then the secondary battery is detached from the cover by reducing the adhesiveness of the first adhesive layer, thereby facilitating detachment. In addition, the secondary battery is detachable in the case that a wrapping film is canceled, thereby increasing space available for placement of the secondary battery, and increasing the capacity of the secondary battery.

The following describes some embodiments of this application with reference to drawings. To the extent that no conflict occurs, the following embodiments and the features in the embodiments may be combined with each other.

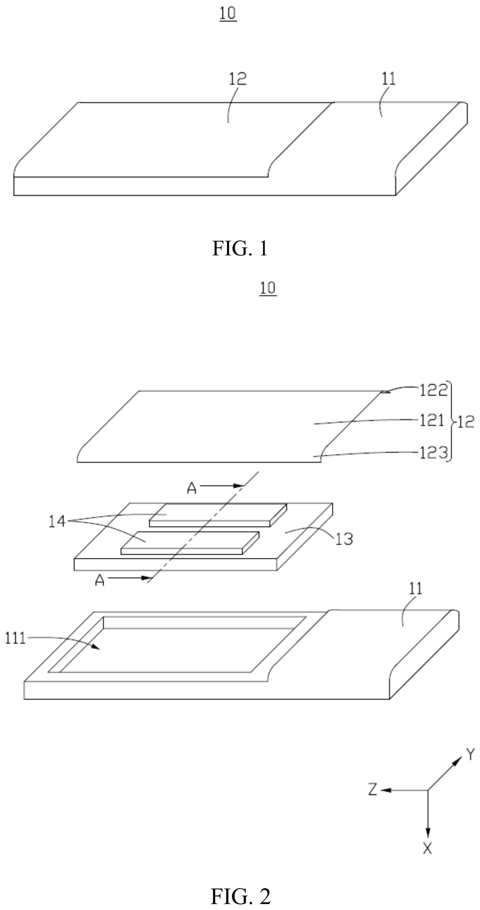

Referring to FIG. 1, an embodiment of this application provides an electrical device 10. The electrical device 10 includes an electrical main body 11 and a cover 12. The cover 12 is detachably disposed on the electrical main body 11. The electrical device 10 may be a mobile phone, a tablet computer, a laptop computer, a camera, or the like.

In some embodiments, one of the electrical main body 11 or the cover 12 is provided with a protruding structure, and the other of the electrical main body 11 or the cover 12 is provided with a recessed structure. The cover 12 is fixed to the electrical main body 11 by a fit between the protruding structure and the recessed structure, and is detached through separation between the protruding structure and the recessed structure.

In some embodiments, one of the electrical main body 11 or the cover 12 is provided with a buckle, and the other of the electrical main body 11 or the cover 12 is provided with a snap slot. The cover 12 is fixed to the electrical main body 11 by snapping the buckle into the snap slot, and is detached therefrom by disengaging the buckle from the snap slot.

In some embodiments, the electrical main body 11 is connected to the cover 12 by adhesive.

In some embodiments, the electrical main body 11 is detachably connected to the cover 12 by a threaded structure.

Referring to FIG. 2, the electrical main body 11 is provided with a battery compartment 111. The electrical device 10 further includes a secondary battery 13. The secondary battery 13 is disposed in the battery compartment 111, and is electrically connected to the electrical main body 11. The cover 12 covers and closes the battery compartment 111. The secondary battery 13 is a battery that is reusable through activation of an active material in the battery by charging the battery that has been discharged.

In some embodiments, a clearance exists between the battery compartment 111 and the secondary battery 13. In this case, the battery compartment 111 can provide space for the secondary battery 13 to expand, thereby reducing the compressive force of the secondary battery 13 on the electrical main body 11 when the secondary battery 13 expands.

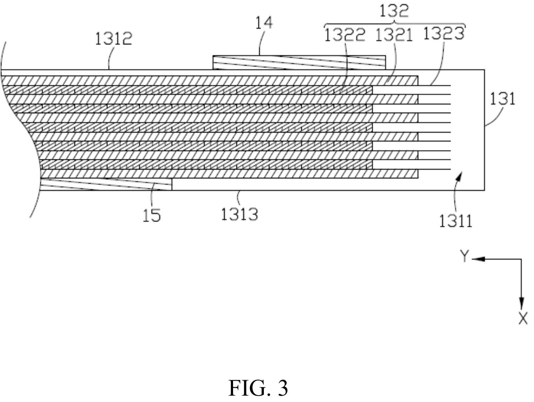

Referring to FIG. 3, the secondary battery 13 includes a housing 131 and an electrode assembly 132. The housing 131 defines an accommodation cavity 1311, and the electrode assembly 132 is disposed in the accommodation cavity 1311.

In some embodiments, the secondary battery 13 is a pouch battery, and the housing 131 is an aluminum laminated film. In other embodiments, the secondary battery 13 is a steel-shell battery, and the housing 131 is a metal shell such as steel shell or aluminum shell. The form of the secondary battery 13 is not limited herein.

In some embodiments, the housing 131 includes a first wall 1312 and a second wall 1313 disposed opposite to each other along a first direction X. The first wall 1312 is located on a side of the secondary battery 13, the side being close to the cover 12. The second wall 1313 is located on a side of the secondary battery 13, the side being close to the electrical main body 11. The first direction X is parallel to a thickness direction of the secondary battery 13.

In some embodiments, the electrode assembly 132 includes a first electrode plate 1321, a second electrode plate 1322, and a separator 1323. The first electrode plate 1321 and the second electrode plate 1322 are of opposite polarities. The separator 1323 is disposed between the first electrode plate 1321 and the second electrode plate 1322.

In some embodiments, the electrode assembly 132 is a stacked-type electrode assembly. The first electrode plate 1321 and the second electrode plate 1322 are stacked alternately. In other embodiments, the electrode assembly 132 is a jelly-roll electrode assembly. The first electrode plate 1321 and the second electrode plate 1322 are wound. The form of the electrode assembly 132 is not limited herein.

In some embodiments, the first electrode plate 1321 is a positive electrode plate, and the second electrode plate 1322 is a negative electrode plate. In other embodiments, the first electrode plate 1321 is a negative electrode plate, and the second electrode plate 1322 is a positive electrode plate.

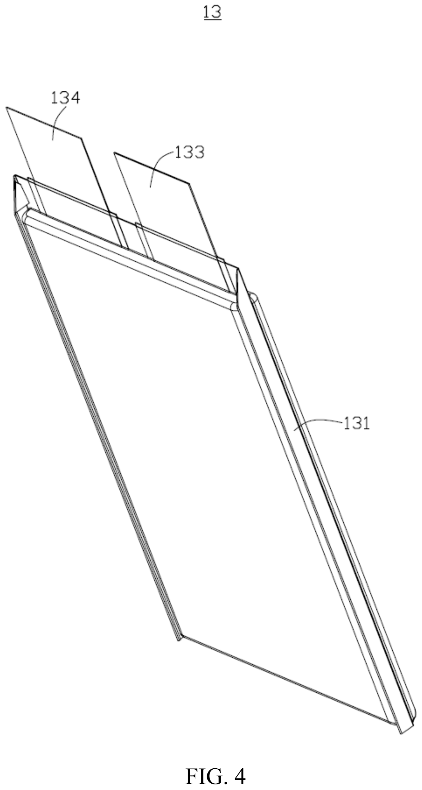

Referring to FIG. 4, in some embodiments, the secondary battery 13 further includes a first tab 133 and a second tab 134. Of the first tab 133, one end is connected to the first electrode plate 1321, and the other end protrudes out of the housing 131. Of the second tab 134, one end is connected to the second electrode plate 1322, and the other end protrudes out of the housing 131.

In some embodiments, the secondary battery 13 further includes a first circuit board (not shown in the figure). The first circuit board is populated with electronic components. The first circuit board collaborates with the electronic components to form a protection circuit to protect the secondary battery 13. For example, the first circuit board collaborates with the electronic components to monitor the voltage, current, temperature, insulation, and other metrics of the secondary battery 13 to reduce the risk that the secondary battery 13 is overcharged, overdischarged, overcurrent, short-circuited, or subjected to ultra-high-temperature charging and discharging. The first tab 133 and the second tab 134 each are electrically connected to the first circuit board.

In some embodiments, the secondary battery 13 further includes a second circuit board (not shown in the figure). One end of the second circuit board is electrically connected to the first circuit board, and the other end of the second circuit board is electrically connected to the electrical main body 11.

The electrical device 10 further includes an adhesive piece 14. The adhesive piece 14 bonds the secondary battery 13 to the cover 12. In some embodiments, the adhesive piece 14 is disposed on an outer side of the first wall 1312, the side being located away from the accommodation cavity 1311.

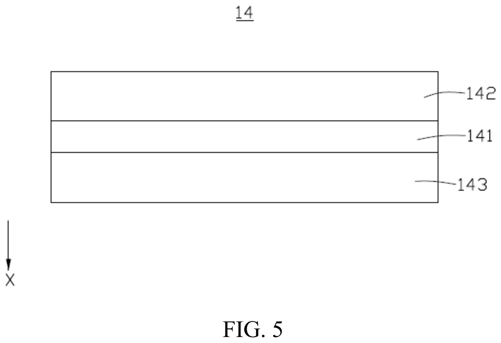

Referring to FIG. 5, the adhesive piece 14 includes a base layer 141, a first adhesive layer 142, and a second adhesive layer 143. Along the first direction X, the first adhesive layer 142 and the second adhesive layer 143 are disposed on different sides of the base layer 141 respectively. In some embodiments, the thickness direction of the adhesive piece 14 and the thickness direction of the electrical device 10 are parallel to the first direction X.

Referring to FIG. 2, in some embodiments, the cover 12 includes a capping portion 121, a first portion 122, and a second portion 123. The first portion 122 and the second portion 123 are disposed opposite to each other on the capping portion 121 along a second direction Y. Along the second direction Y, projections of the first portion 121 and the second portion 122 cover a projection of the adhesive piece 14. The first portion 121 and the second portion 122 facilitate protection for the adhesive piece 14. The second direction Y is parallel to a width direction of the secondary battery 13.

In some embodiments, the cover 12 further includes a third portion (not shown in the figure). The third portion is disposed on the capping portion 121 and is connected to the first portion 122 and the second portion 123 along the third direction Z. Along the third direction Z, a projection of the third portion covers the projection of the adhesive piece 14. The third portion further facilitates protection for the adhesive piece 14. The third direction Z is parallel to a length direction of the secondary battery 13. The first direction X, the second direction Y, and the third direction Z are perpendicular to each other.

The first adhesive layer 142 is bonded to the cover 12, and the second adhesive layer 143 is bonded to the housing 131. The first adhesive layer 142 is of a reducible adhesiveness, and the second adhesive layer 143 is of a fixed adhesiveness. The first adhesive layer 142 being of a reducible adhesiveness means that the adhesiveness of the first adhesive layer 142 is reduced under conditions such as temperature variation, light, and static electricity. The second adhesive layer 143 being of a fixed adhesiveness means that the adhesiveness of the second adhesive layer 143 remains unchanged under conditions such as temperature variation, light, and static electricity. It is hereby noted that the adhesiveness of the second adhesive layer 143 may decrease over time or due to other factors, and is not absolutely constant. Compared with the second adhesive layer 143, the first adhesive layer 142 is disposed closer to the cover 12, thereby more conveniently reducing the adhesiveness of the first adhesive layer 142 through the cover 12, and improving the convenience of detaching the secondary battery 13.

The adhesive piece 14 bonds the secondary battery 13 to the cover 12. The second adhesive layer 143 of a fixed adhesiveness reduces the probability of wobbling of the secondary battery 13 in the battery compartment 111, and improves the stability of the secondary battery 13 in the battery compartment 111. When the secondary battery 13 needs to be detached, the cover 12 is detached from the electrical main body 111 first, and then the secondary battery 13 is detached from the cover 12 by reducing the adhesiveness of the first adhesive layer 142, thereby facilitating detachment. In addition, the secondary battery 13 is detachable in the case that a wrapping film is canceled, thereby increasing space available for placement of the secondary battery 13, and increasing the capacity of the secondary battery 13.

In some embodiments, the case in which the secondary battery 13 needs to be detached means a situation in which the first circuit board or the second circuit board fails and causes the secondary battery 13 to fail to work properly, making it necessary to detach the secondary battery 13 for repair.

In some embodiments, the case in which the secondary battery 13 needs to be detached means a situation in which the cycle life of the secondary battery 13 is too low to support long-term use of the electrical main body 11, making it necessary to detach the secondary battery 13 for replacement.

In some embodiments, the adhesiveness of the first adhesive layer 142 is reducible to a level lower than the adhesiveness of the second adhesive layer 143, and the adhesiveness of the first adhesive layer 142 differs from the adhesiveness of the second adhesive layer 143 by at least 50 N/m. In this case, the adhesiveness of the first adhesive layer 142 can be reduced to a level significantly different from that of the second adhesive layer 143, thereby causing the cover 12 to be more detachable from the adhesive piece 14 than the secondary battery 13, and further improving the convenience of detaching the secondary battery 13 from the cover 12.

In other embodiments, the first adhesive layer 142 is bonded to the housing 131, and the second adhesive layer 143 is bonded to the cover 12. In detaching the secondary battery 13 for replacement, the adhesive piece 14 can remain bonded to the cover 12, facilitating reuse of the adhesive piece 14.

In some embodiments, the thickness of the adhesive piece 14 is 50 µm to 150 µm. For example, the thickness of the adhesive piece 14 is 50 µm, 60 µm, 80 µm, 100 µm, 120 µm, or 150 µm.

In some embodiments, the thickness of the second adhesive layer 143 is less than the thickness of the first adhesive layer 142. The adhesiveness of the first adhesive layer 142 is reducible, and the adhesiveness of the second adhesive layer 143 is fixed. Therefore, in practical applications, the second adhesive layer 143 can be made thinner than the first adhesive layer 142, thereby further increasing the space available for placement of the secondary battery 13 and consequently further increasing the capacity of the secondary battery 13.

In some embodiments, the thickness of the first adhesive layer 142 is 10 µm to 50 µm. For example, the thickness of the first adhesive layer 142 is 10 µm, 15 µm, 20 µm, 30 µm, or 50 µm. With a thickness falling within the range of 10 µm to 50 µm, the first adhesive layer 142 is prevented from being excessively thick, thereby increasing the capacity of the secondary battery 13, and the first adhesive layer 142 is prevented from being excessively thin, thereby ensuring sufficient bonding strength between the first adhesive layer 142 and the cover 12, reducing the probability of movement of the secondary battery 13 relative to the cover 12 within the battery compartment 111, and improving the stability of the secondary battery 13 within the battery compartment 111.

In some embodiments, the thickness of the second adhesive layer 143 is 5 µm to 30 µm. For example, the thickness of the second adhesive layer 143 is 5 µm, 10 µm, 15 µm, 20 µm, or 30 µm. With a thickness falling within the range of 5 µm to 30 µm, the second adhesive layer 143 is prevented from being excessively thick, thereby increasing the capacity of the secondary battery 13, and the second adhesive layer 143 is prevented from being excessively thin, thereby ensuring sufficient bonding strength between the second adhesive layer 143 and the housing 131, reducing the probability of movement of the secondary battery 13 relative to the cover 12 within the battery compartment 111, and improving the stability of the secondary battery 13 within the battery compartment 111.

In some embodiments, the material of the first adhesive layer 142 includes a first material and a second material. The first material includes at least one of polyacrylate, polyurethane, epoxy resin, or a derivative thereof. The second material includes at least one of silicon dioxide, aluminum oxide, fluorinated compound, or titanium dioxide. A refractive index of the first material is n₁, and a refractive index of the second material is n₂, satisfying: 1.3 ≤ n₁ ≤ 1.4, and 1.3 ≤ n₂ ≤ 1.4. A solid content of the first adhesive layer is m₁, satisfying: 10% ≤ m₁ ≤ 60%. In this case, the adhesiveness of the first adhesive layer 142 is reducible as irradiated by ultraviolet light. The ultraviolet light irradiating the first adhesive layer 142 facilitates detachment of the secondary battery 13 from the cover 12. Furthermore, the ultraviolet light brings just a low adverse effect on the secondary battery 13. When the secondary battery 13 is detached from the cover 12 by ultraviolet light irradiation in order to repair the secondary battery 13, damage to the performance of the secondary battery 13 is reduced.

In some embodiments, the wavelength of the ultraviolet light falls within a range of 10 nm to 400 nm. In some embodiments, the adhesive strength of the first material irradiated by ultraviolet light falls within a range of 1 N/cm² to 10 N/cm².

In some embodiments, along the first direction X, a light transmittance of an overlap part of the cover 12 that overlaps a projection of the first adhesive layer 142 is greater than 70%. In this case, it is convenient for the ultraviolet light to more effectively irradiate the first adhesive layer 142 along the first direction X through the cover 12, thereby quickening reduction of the adhesiveness of the first adhesive layer 142 and further improving the convenience of detaching the secondary battery 13 from the cover 12.

In some embodiments, the material of the first adhesive layer 142 includes a third material and a fourth material. The third material includes at least one of polyacrylate, polyurethane, epoxy resin, or a derivative thereof. The fourth material includes at least one of silicone oil, fluorinated compound, wax, or a surfactant. The solid content of the first adhesive layer 142 is m₁, satisfying: 10% ≤ m₁ ≤ 60%. In this case, the adhesiveness of the first adhesive layer 142 is reducible under a low-temperature condition. The reduction in the temperature of the first adhesive layer 142 improves the convenience of detaching the secondary battery 13 from the cover 12.

In some embodiments, the low-temperature condition means a temperature of - 30 °C to -10 °C. The adhesiveness of the first adhesive layer 142 is reducible when the first adhesive layer is kept under the low-temperature condition for 5 to 10 minutes. Such low-temperature condition and duration can reduce damage to the performance of the secondary battery 13. In some embodiments, the adhesiveness of the first adhesive layer 142 can be reduced at any temperature within a range of -30 °C to -10 °C by varying parameters such as the mass ratio between components of the third material and the fourth material and the solid content of the first adhesive layer 142.

In some embodiments, the material of the first adhesive layer 142 includes a fifth material and a fourth material. The fifth material includes at least one of polyacrylate, polyurethane, epoxy resin, phenolic resin, silicone rubber, or a derivative thereof. The fourth material includes at least one of silicone oil, fluorinated compound, wax, or a surfactant. The solid content of the first adhesive layer 142 is m₁, satisfying: 10% ≤ m₁ ≤ 60%. In this case, the adhesiveness of the first adhesive layer 142 is reducible under a high-temperature condition. The increase in the temperature of the first adhesive layer 142 improves the convenience of detaching the secondary battery 13 from the cover 12.

In some embodiments, the high-temperature condition means a temperature of 65 °C to 85 °C. The adhesiveness of the first adhesive layer 142 is reducible when the first adhesive layer is kept under the high-temperature condition for 5 to 10 minutes. Such high-temperature condition and duration can reduce damage to the performance of the secondary battery 13. In some embodiments, the adhesiveness of the first adhesive layer 142 can be reduced at any temperature within a range of 65 °C to 85 °C by varying parameters such as the mass ratio between components of the fifth material and the fourth material and the solid content of the first adhesive layer 142.

In some embodiments, the material of the cover 12 includes a metal material, thereby improving the thermal conductivity of the cover 12, and making it convenient to increase the speed of temperature drop or rise of the first adhesive layer 142, and consequently quickening reduction of the adhesiveness of the first adhesive layer 142 and further improving the convenience of detaching the secondary battery 13 from the cover 12.

In some embodiments, the base layer 141 is provided with a slit (not shown in the figure). A cleaving direction of the slit is not parallel to the first direction X. In this case, in the case that the secondary battery 13 is greatly affected by temperature and it is inconvenient to detach the secondary battery 13 from the cover 12 by reducing the adhesiveness of the first adhesive layer 142 under a high-temperature condition or a low-temperature condition, the secondary battery 13 may be separated from the cover 12 through the slit first, and then the adhesiveness of the first adhesive layer 142 that remains on the cover 12 is reduced to separate the cover 12 from the first adhesive layer 142, thereby facilitating the reuse of the cover 12.

In some embodiments, the electrical device 10 further includes a securing piece (not shown in the figure). The securing piece is disposed on the cover 12. The secondary battery 13 is removably secured to the cover 12 by the securing piece. The securing piece reduces the probability that the secondary battery 13 wobbles in the battery compartment 111 due to unexpected reduction of the adhesiveness of the first adhesive layer 142. It is hereby noted that the unexpected reduction in the adhesiveness of the first adhesive layer 142 may be caused by a factor that the electrical device 10 is accidentally under a high-temperature condition (for example, self-heating of the secondary battery 13, or high temperature caused by poor heat dissipation performance of the electrical main body 11 and the cover 12) or a low-temperature condition, or by other factors.

In some embodiments, the cover 12 is provided with a groove (not shown in the figure). At least a part of the adhesive piece 14 is accommodated in the groove. In this case, the space occupied by the adhesive piece 14 in the electrical device 10 can be reduced, thereby further increasing the space available for placement of the secondary battery 13 and consequently further increasing the capacity of the secondary battery 13. In addition, when the adhesiveness of the first adhesive layer 142 is reduced under a high-temperature condition or a low-temperature condition, a thermal conduction path from the cover 12 to the first adhesive layer 142 can be shortened through the groove, thereby increasing the speed of temperature drop or rise of the first adhesive layer 142, and consequently quickening reduction of the adhesiveness of the first adhesive layer 142 and further improving the convenience of detaching the secondary battery 13 from the cover 12.

In some embodiments, the material of the first adhesive layer 142 includes at least one of polyaniline, polypyrrole, or polythiophene; and the solid content of the first adhesive layer 142 is m₁, satisfying: 10% ≤ m₁ ≤ 60%. In this case, the adhesiveness of the first adhesive layer 142 is reducible under an electrostatic condition. By leaving electrostatic charges to flow through the cover 12, the convenience of detaching the secondary battery 13 from the cover 12 is improved.

In some embodiments, the material of the first adhesive layer 142 further includes at least one of an alkyl sulfate salt, an alkylbenzene sulfonate, a quaternary ammonium salt, an amine salt, polyethylene glycol, or polyoxyethylene. In this case, the resistivity of the first adhesive layer 142 is reduced, and the speed of conducting electrostatic charges away from the secondary battery 13 is increased, thereby reducing the damage to the performance of the secondary battery 13 caused by electrostatic accumulation after the adhesiveness of the first adhesive layer 142 is electrostatically reduced.

In some embodiments, the material of the first adhesive layer 142 further includes at least one of conductive polyurethane, conductive polyamide, a nanotube coating, or a graphene coating. In this case, the first adhesive layer 142 provides a low-resistance path for conducting electrostatic charges away from the secondary battery 13, thereby increasing the speed of conducting electrostatic charges away from the secondary battery 13, and reducing the damage to the performance of the secondary battery 13 caused by electrostatic accumulation after the adhesiveness of the first adhesive layer 142 is electrostatically reduced.

In some embodiments, the material of the second adhesive layer 143 includes a sixth material. The sixth material includes at least one of polyacrylate, polyurethane, epoxy resin, or a derivative thereof. A refractive index of the sixth material is n₆, satisfying: 1.4 < n₆ ≤ 1.6. The solid content of the second adhesive layer 143 is m₂, satisfying: m₂ > 60%. In this case, the adhesiveness of the second adhesive layer 143 can remain unchanged under conditions such as temperature variation, light, and static electricity, thereby improving the stability of adhesion between the adhesive piece 14 and the housing 131. Understandably, is less than 100%.

In some embodiments, the adhesive strength of the sixth material irradiated by ultraviolet light is greater than 10 N/cm² and less than or equal to 20 N/cm².

In some embodiments, the number of adhesive pieces 14 is two, and the two adhesive pieces 14 are spaced apart. Compared to a practice in which the secondary battery 13 is bonded to the cover 12 by using a single large adhesive piece 14, the practice of bonding the secondary battery 13 to the cover 12 by using two adhesive pieces 14 spaced apart can reduce the space to be occupied by the adhesive piece 14 on the one hand, thereby further increasing the capacity of the secondary battery 13. On the other hand, this improves the convenience of detaching the secondary battery 13. In other embodiments, depending on the dimensions of the secondary battery 13, the number of adhesive pieces 14 may be three, four, or more.

In some embodiments, two adhesive pieces 14 are spaced apart along the second direction Y.

In some embodiments, two adhesive pieces 14 are spaced apart along the third direction Z.

Referring to FIG. 3, in some embodiments, the secondary battery 13 includes a fixing piece 15. The electrode assembly 132 is fixedly connected to the housing 131 by the fixing piece 15. Along the first direction X, a projection of the fixing piece 15 is separate from a projection of the adhesive piece 14. By staggering the fixing piece 15 from the adhesive piece 14 along the first direction X, this application reduces the total space occupied by the fixing piece 15 and the adhesive piece 14 together in the first direction X, thereby further increasing the space available for placement of the secondary battery 13 and further increasing the capacity of the secondary battery 13.

In some embodiments, the fixing piece 15 is a hot-melt adhesive. In detaching the secondary battery 13 from the cover 12, the adhesiveness of the first adhesive layer 142 is reduced by low temperature, ultraviolet light, or static electricity. In this way, compared to the practice of reducing the adhesiveness of the first adhesive layer 142 under a high-temperature condition, this practice reduces the aging of the hot-melt adhesive, thereby reducing the risk of failure of the hot-melt adhesive.

In some embodiments, the fixing piece 15 is disposed on an inner side of the second wall 1313, the side being close to the accommodation cavity 1311. The fixing piece 15 is relatively far away from the adhesive piece 14. In reducing the adhesiveness of the first adhesive layer 142 by using high temperature, the impact of the high temperature on the fixing piece 15 is reduced, thereby improving the stability of the electrode assembly 132 relative to the housing 131.

In some embodiments, the number of fixing pieces 15 is two, and the two fixing pieces 15 are spaced apart.

In some embodiments, along the second direction Y, the width of the fixing piece 15 is 15 mm to 40 mm. For example, the width of the fixing piece 15 is 15 mm, 20 mm, 30 mm, or 40 mm. Understandably, the width of the fixing piece 15 is not limited to these examples, and the width of the fixing piece 15 may be adaptively adjusted according to the width of the electrode assembly 132. In some embodiments, along the third direction Z, a ratio of the length of the fixing piece 15 to the length of the electrode assembly 132 is approximately 2/3.

In addition, a person of ordinary skill in the art understands that the foregoing embodiments are merely intended to illustrate this application, but not to limit this application. Any and all appropriate modifications and changes made to the embodiments without departing from the essence of this application still fall within the protection scope of this application.

## Claims

1. An electrical device (10), **characterized in that** the electrical device (10) comprises:
an electrical main body (11), wherein the electrical main body (11) is provided with a battery compartment (111);
a cover (12), wherein the cover (12) is detachably attached on the electrical main body (11) to cover the battery compartment (111);
a secondary battery (13), wherein the secondary battery (13) is disposed in the battery compartment (111) and electrically connected to the electrical main body (11); and the secondary battery (13) comprises a housing (131) and an electrode assembly (132), and the electrode assembly (132) is disposed in the housing (131); and
an adhesive piece(14), wherein the adhesive piece (14) comprises a base layer (141), a first adhesive layer (142), and a second adhesive layer (143); along a first direction (X), the first adhesive layer (142) and the second adhesive layer (143) are disposed on different sides of the base layer (141) respectively; and the first adhesive layer (142) is of a reducible adhesiveness and is bonded to the cover (12), and the second adhesive layer (143) is of a fixed adhesiveness and is bonded to the housing (131).

2. The electrical device (10) according to claim 1, **characterized in that** a material of the first adhesive layer (142) comprises a first material and a second material; the first material comprises at least one of polyacrylate, polyurethane, epoxy resin, or a derivative thereof; the second material comprises at least one of silicon dioxide, aluminum oxide, fluorinated compound, or titanium dioxide; a refractive index of the first material is n₁, and a refractive index of the second material is n₂, satisfying: 1.3 ≤ n₁ ≤ 1.4, and 1.3 ≤ n₂ ≤ 1.4; and a solid content of the first adhesive layer (142) is m₁, satisfying: 10% ≤ m₁ ≤ 60%.

3. The electrical device (10) according to claim 1 or 2, **characterized in that**, along the first direction (X), a light transmittance of an overlap part of the cover (12) that overlaps a projection of the first adhesive layer (142) is greater than 70%.

4. The electrical device (10) according to claim 1, **characterized in that** a material of the first adhesive layer (142) comprises a third material and a fourth material; the third material comprises at least one of polyacrylate, polyurethane, epoxy resin, or a derivative thereof; the fourth material comprises at least one of silicone oil, fluorinated compound, wax, or a surfactant; and a solid content of the first adhesive layer (142) is m1, satisfying: 10% ≤ m₁ ≤ 60%.

5. The electrical device (10) according to claim 1, **characterized in that** a material of the first adhesive layer (142) comprises a fifth material and a fourth material; the fifth material comprises at least one of polyacrylate, polyurethane, epoxy resin, phenolic resin, silicone rubber, or a derivative thereof; the fourth material comprises at least one of silicone oil, fluorinated compound, wax, or a surfactant; and a solid content of the first adhesive layer (142) is m1, satisfying: 10% ≤ m₁ ≤ 60%.

6. The electrical device (10) according to claim 4 or 5, **characterized in that** a material of the cover (12) comprises a metal.

7. The electrical device (10) according to any one of claims 1 to 6, **characterized in that** a material of the first adhesive layer (142) comprises at least one of polyaniline, polypyrrole, or polythiophene; and a solid content of the first adhesive layer (142) is m1, 10% ≤ m₁ ≤ 60%; and/or,
the material of the first adhesive layer (142) further comprises at least one of an alkyl sulfate salt, an alkylbenzene sulfonate, a quaternary ammonium salt, an amine salt, polyethylene glycol, or polyoxyethylene; and/or,
the material of the first adhesive layer (142) further comprises at least one of conductive polyurethane, conductive polyamide, a nanotube coating, or a graphene coating.

8. The electrical device (10) according to claim 1, **characterized in that** a material of the second adhesive layer (143) comprises a sixth material; the sixth material comprises at least one of polyacrylate, polyurethane, epoxy resin, or a derivative thereof; a refractive index of the sixth material is n6, satisfying: 1.4 < n₆ ≤ 1.6; and a solid content of the second adhesive layer (143) is m₂, satisfying: m₂ > 60%.

9. The electrical device (10) according to any one of claims 1 to 8, **characterized in that** the secondary battery (13) comprises a fixing piece (15), and the electrode assembly (132) is fixedly connected to the housing (131) by the fixing piece (15); and along the first direction (X), a projection of the fixing piece (15) is separate from a projection of the adhesive piece (14).

10. The electrical device (10) according to any one of claims 1 to 9, **characterized in that** the base layer (141) is provided with a slit, and a direction of the slit is not parallel to the first direction (X).

11. The electrical device (10) according to any one of claims 1 to 10, **characterized in that** the electrical device (10) further comprises a securing piece, the securing piece is disposed on the cover (12), and the secondary battery (13) is removably secured to the cover (12) by the securing piece.

12. The electrical device (10) according to any one of claims 1 to 11, **characterized in that** the adhesiveness of the first adhesive layer (142) is reducible to a level lower than the adhesiveness of the second adhesive layer (143), and the adhesiveness of the first adhesive layer (142) differs from the adhesiveness of the second adhesive layer (143) by at least 50 N/m.

13. The electrical device (10) according to any one of claim 1 to 12, **characterized in that** the cover (12) is provided with a groove, and at least a part of the adhesive piece (14) is accommodated in the groove.

14. The electrical device (10) according to any one of claims 1 to 13, **characterized in that** a thickness of the second adhesive layer (143) is less than a thickness of the first adhesive layer (142).

15. The electrical device (10) according to any one of claims 1 to 14, **characterized in that** the thickness of the first adhesive layer (142) is 10 µm to 50 µm, and the thickness of the second adhesive layer (143) is 5 µm to 30 µm.
